# EUROPEAN PATENT APPLICATION

(11) **EP 1 452 938 A1**
(43) Date of publication of application: **01.09.2004**
(21) Application number: 01951705.1
(22) Date of filing: 16.07.2001
(51) Int. Cl.: G06F 1/00, H04L 29/06

(54) **SYSTEM AND METHOD EMPLOYED TO ENABLE A USER TO SECURELY VALIDATE THAT AN INTERNET RETAIL SITE SATISFIES PRE-DETERMINED CONDITIONS**

(71) Applicant: Intelligent Software Components, S.A., 08190 San Cugat del Valles (ES)
(72) Inventor: RIERA JORDA, Andreu, E-08251 Santpedor (ES)
(74) Representative: Gislon, Gabriele
(86) International application number: PCT/ES2001/000283
(87) International publication number: WO 2003/009109

(57) **Abstract**

System and method to allow a secure validation that an Internet provider site fulfils predetermined conditions to be used in a network, to manage electronic communication between one o more users and one or more provider sites, each of them capable to establish a coupling to a verification server of an authorisation body via secure connections, and each provider sites including a site identifying feature that is validated through automatic connection with said verification server. At each of said provider sites one-time cryptographic credentials associated to said site identifying feature are generated each time a user tries to verify whether the site fulfils predetermined conditions and said verification server authenticates at said each time said site identifying feature by processing said one-time cryptographic credentials.

## Description

### Field of the invention

The present invention relates to a system to allow a user or customer to obtain a secure validation of a provider or merchant site identified trough a trust seal consisting in a graphical file or logo. By clicking on said logo a message is sent through a secure route to a verification centre which guarantees said site fulfilling predetermined conditions so that a costumer can trust it. It is a well-known fact that trust is a key success factor for the expansion of e-commerce.

The invention also refers to a method to implement said system, to a computer program prepared to generate the special features of said message and to a program that validates said features.

Both the system and method proposed are based on special-purpose cryptographic techniques leading to an on-line method to protect the precited trust seals that improve largely their security with regard to the current state of the art.

### Background of the invention

Commercial transactions have a need for security. On the buyers' side, customers want to be sure they are dealing with a provider that fulfils all the settled requirements in accordance to reasonable commerce practices and standards. For example, the clients want the goods to be delivered on time and they do not want to be charged more than the price agreed as per the contract.

Concerns of this kind are usually addressed through trust relationships. In the real world, customers use in the first place their own experience to trust the providers they deal with. If someone has been dealing with a certain provider for a long period of time and the experience has always been satisfying, that customer will likely trust the provider for new commercial transactions as well. In case of lacking previous experience, the trust may be based on the experience of others, or on the credit the provider may deserve (considering the brand's prestige, for example). Ultimately, if there is no way at all to establish any trust relationship, the customer can still feel quite confident because he/she is buying at a physical place, which eases prosecution.

Trading on the Web changes everything. Commercial transactions do not take place face-to-face. There is no physical context in which trust relationships can be rooted. Furthermore, one of the objectives of a business selling online is to attract new customers, which will probably be geographically remote. To solve the problem of such lack of physical context, security protocols based on digital certificates such as the TLS protocol [Dierks, T. and Allen, C. (1999) The TLS Protocol, Version 1.0, Request for Comments 2246, January 1999] or its predecessor SSL [Freier, A.O. and Karlton, P. and Kocher, P.C. (1996) The SSL Protocol, Version 3.0, Internet-Draft, November 1996], may help. Said protocols provide website authentication (assuring the customer that he/she is contacting the right website). Still, the user interface offered by web browsers for these security protocols is not the most adequate. The user must explicitly check the data fields of the website certificate in order to have any assurance of which site has been contacted. This is really done in few occasions . Moreover, website authentication is normally useless to provide assurance of specific characteristics of the provider (for example, assurance that said provider follows proper controls to protect customers' privacy, or assurance that it is an authorized dealer of a certain brand).

To overcome these limitations, trust seals become a good alternative to certificate-based security protocols. There are currently some non-profit organizations and commerce associations providing trust seals for e-commerce providers. Some so known as dotcom companies and renowned PKI (Public Key Infrastructure) vendors offer also this kind of service. From among the most important ones can be named TRUSTe, CPA Webtrust, Verisign, BBN Online, PrivacyBot, PriceWaterHouseCoopers, Secure Assure, NetTrust, and WebAssured. For the purposes of this explanation, any of these organizations will be hereinafter called "the authorization body". Authorization bodies issue trust seals only after extensive examinations of the trading practices of e-commerce merchants. Certifications of this kind are therefore apt to inspire with trust those consumers who are engaging in e-commerce dealings.

Trust seals are implemented as graphical files or logos. When a provider or merchant is evaluated and certified, it is authorised to display the seal logo on its home page (or on any other desired web pages). The seal vouches for the approved certification. The implementation of trust seals in form of graphical logos provides the customer with the required assurance at first glance. However, a graphical logo could be straightforwardly copied and placed on the web pages of any impostor. To protect the system from this kind of attacks, the logos are actually clickable. Clicking on a seal logo as stated before allows the customer to gain assurance of the authenticity of the seal.

However the inventor has detected weaknesses or limitations of these methods to verify these authorizations. Such weaknesses allow an attacker capable of subverting part of the Domain Name System (DNS) to forge the verification, and to appear as an authorised site.

Current trust seals can be classified into two main groups, depending on the process caused by the click of a customer on the logo.

A first group of seals allow the online verification of the logo by means of a connection between the customer and a web server of the authorization body.

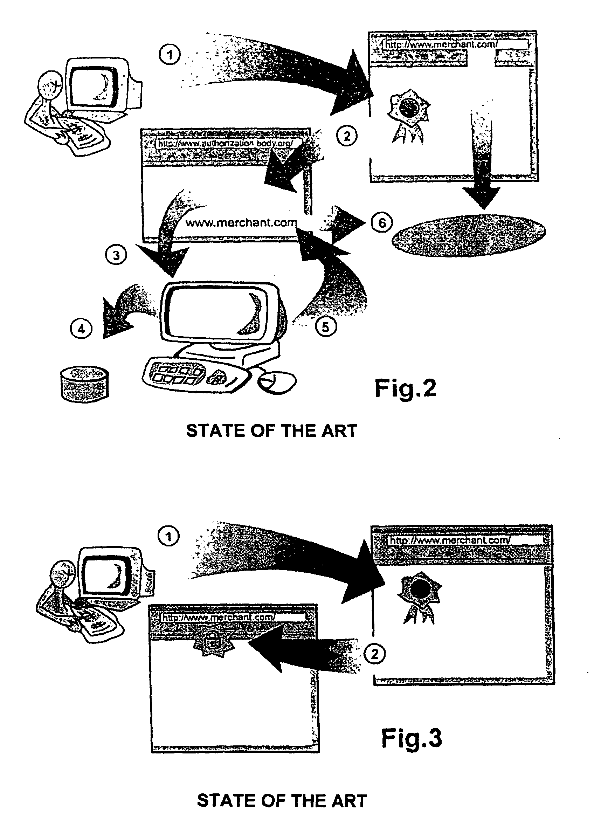

The seals of said first group base the security of the seal verification process on the security of the IP (Internet Protocol) address/DNS name association (see Abitz, P. and Liu, Cricket (1998) DNS and BIND, O'Reilly, September 1998 for a detailed explanation of the IP address resolution method). When a seal of this first group is clicked, a new browsing window pops up to the user. Through this window, a new connection to a web server of the authorization body is established. This connection is normally secured by SSL (Secure Socket Layer) although surprisingly in some cases it is not. The web server of the authorization body is provided with a static provider identifier, which is used to look up the provider on a local database. The precise DNS name corresponding to that provider is then displayed to the user through the new window. The user is then requested to check the original URL (Uniform Resource Locator) of the internet site, which he/she is connected to. If both DNS names match, this means the user is supposed to be connected to the authorised website. This process is graphically explained in Figure 2 of the attached drawings referring to the state of the art.

Note that if an attacker is capable of forging the IP address/DNS name association, the customer may easily be fooled to believe he/she is connected to a certified provider. All the attacker has to do is to choose an actually certified provider, learn its static identifier (by just clicking on its real seal), and then copy the seal and the identifier onto its own website. At all events, the most difficult part of this attack is to forge the translation from the DNS name of the real provider into a fake IP address (the one of the attacker). This can be done in a number of ways:
- the IP address resolution protocol is currently insecure; therefore, the messages sent back and forth from the customer's client software to the corresponding DNS name server may potentially be forged.;
- if the attacker is (or has the collaboration of) an ISP (Internet Service Provider) system administrator, then all customers that access the Internet through such ISP can be fooled because they are likely using the ISP's DNS name server;
- poorly administered DNS name servers can also be remotely hacked;
- because of HTTP clients cache the results of host name lookups (and network renumbering is expected to become increasingly common) customers can be spoofed when a previously-accessed server's IP address changes;
- the IP address resolution process can actually be completely bypassed by gaining privileges on the consumer's computer and modifying the TCP/IP (Transmission Control Protocol/Internet protocol) configuration files. This can be done by means of viruses and Trojan horses.

In the second group of seals, the authorization body does not do the verification of the logo. The customer is rather directed to check by himself/herself the data on the SSL digital certificate of the provider's website. But this second method imposes several limitations.

In more detail, the second group of seals avoids these security hazards by basing its security on the digital certificates used to provide merchant web sites with SSL connections. In contrast with the first group of seals, clicking on the logo does not cause a new connection to a third party web server. Instead, the user remains on the provider site. All the seal does is to open an additional SSL-secured connection to the merchant web site through a new pop-up window. On this window, the user is directed to check the status of the SSL connection. In particular, the user is requested to verify the data on the merchant's certificate. Besides the authentication data (such as the DNS name), the certificate incorporates also a brief comment stating that the business has passed the required quality examinations. This process is graphically explained in Fig. 3 of the attached drawings referring to the state of the art.

The method is limited because the seal works only in complete coordination with the PKI vendor that has issued the merchant's digital certificate. If the internet provider had already purchased a digital certificate from another vendor, it has to be discarded and a new one must be purchased.

Furthermore revocation of trust seals is not easily handled. The reason is that the seals are not verified online by an authorization body. The verification of seals rather relies on the contents of a digital certificate (which are usually one to two years valid).

US. 5.948.103 refers to an electronic document security system, an affixed electronic seal secure system and an electronic signature security system, wherein an electronic document including a symbolic figure is encoded in accordance with a confidential key and a predetermined characteristic is extracted from the encoded electronic document, modifying then the symbolic figure in accordance with said document's characteristic. However the disclosed system is not appropriate for the purpose of this invention, i.e. the secure validation of a trust seal as per the precited background.

### Summary of the invention

The methods explained above can be improved. Current seals have a lack of explicit cryptographic support as the inventor has realised. Adding special-purpose cryptography is basic to improve them.

The present invention proposes a cryptographic system and method to secure trust seals. This system and method allows an authorization body to issue personalized unforgeable trust seals to e-commerce providers. These trust seals can be verified by customers (by clicking on the logo) and they may be used for any purpose e.g. to assure the soundness of e-commerce practices, or to assure the site is an authorized dealer of a known brand, i.e. the site fulfils a predetermined condition.

In the design of the proposed system and method, there are assumed three premises that make it useful in most scenarios:
- providers shall not be forced to purchase an SSL digital certificate from any specific vendor;
- customers shall not be forced to install any specific software on their computers; it is just assumed that customers use a standard web browser;
- to avoid excessive computational overloads, only symmetric cryptography will be employed to implement the seals.

To implement the proposed seal verification system and method, as per a preferred embodiment, the following components are required:
- Seal software at the merchant's site: This software is generic to all merchants, and it must be installed on every merchant's site along with the graphical logo. An additional secret key that is unique to every provider is also installed with the software.
- Online verification server: This server tells customers about the authenticity of the seals they click on by validating the seal generated by said seal software. The verification server belongs (and is administered by) the company or organization that issues the seals. This could be an independent examination body, or the company that is licensing authorized retailers, for example. The online verification server maintains a local database of all certified providers. The administration of the seals is therefore very easy. Issuing new seals, changing the characteristics of a certified provider, or revoking previously issued seals, is just a matter of doing the appropriate operations on this database.

Therefore the system and method of the invention allow a secure validation of a provider site fulfilling predetermined conditions, in a communication network, to manage electronic communication between one or more users and one or more providers each of them being capable of establishing a coupling to a verification server via secure connections, each of said provider sites including a site identifying feature prepared to be linked by an associated software to said verification server in order to allow the user to obtain an authentication or trust about the provider site by means of a suitable validation of said identifying feature, said system and method being characterised in that they comprise:
first means at each of said provider sites prepared to generate one-time cryptographic credentials associated to said site identifying feature ensuring freshness of said credentials; and
second means at said verification server prepared to authenticate said site-identifying feature by processing said cryptographic credentials.

Said cryptographic credentials are generated on the basis of a processing by said first means of a unique secret key given to said providers by said verification server, and said authentication at said verification server uses said secret keys stored at a database thereof or in another storage system.

In an alternative, less preferred embodiment (because needing more complex computational work) said cryptographic credentials are generated on the basis of a unique private key maintained by each provider and associated to a public key to be used by said verification server to authenticate said site identifying feature. With its private key each of the providers will add a digital signature on the cryptographic credentials they generate.

The features of both the system and the method proposed will be further detailed below with the help of some drawings attached to this description only by way of nonlimiting Examples.

### Brief description of the drawings

Fig. 1 shows an overview of the scenario where the invention finds its application.
Fig. 2 depicts a first verification method of trust seals (first group) already described, as a prior art.
Fig. 3 corresponds to the second verification method of trust seals (second group) described, as a prior art.
Fig. 4 is a picture disclosing an overview of the online verification of trust seals according to the invention.
Fig. 5 is a detail of one example of a one-time seal token generated by a provider site.
Fig. 6 is a diagram showing the verification of a seal token by the online verification server according to the invention.

### Detailed description

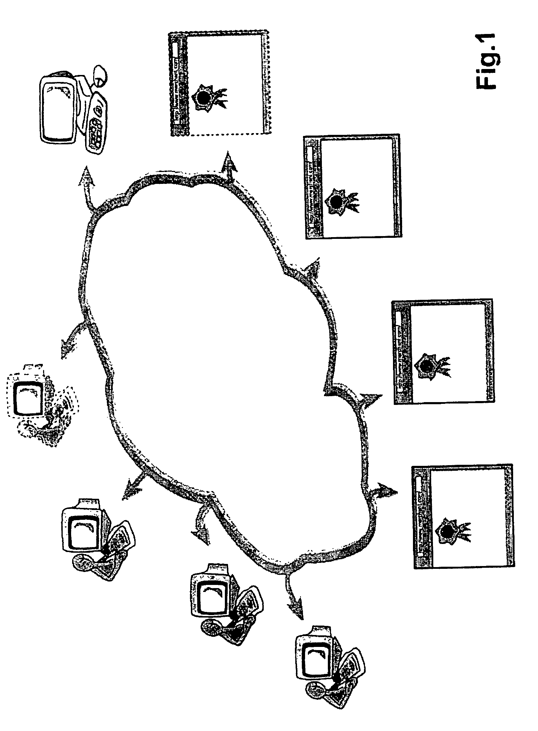

In Fig. 1 we see a schematic representation of a communication network employed by a set of users or customers to interact with a set of providers or merchants. In order to allow a secure validation by said users that said provider site fulfils a predetermined condition related to the capabilities of said providers previously recognised by an authorization body a trust seal is exhibited over the network which has been given to said providers by said authorization body.

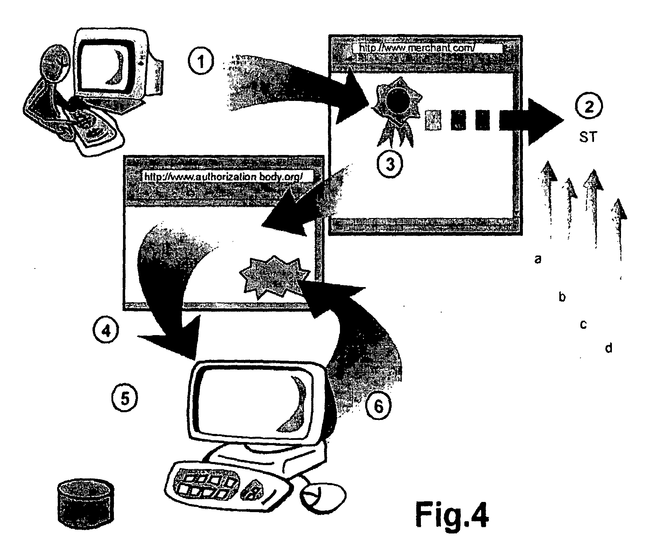

The very core of the proposed system and method as per the invention is based on the use of keyed-hashed Message Authentication Codes (MACs) [Bellare, M. and Canetti, R. and Krawczyk, H. (1996) Keying hash functions for message authentication (Extended Abstract), Advances in Cryptology - Crypto 96 Proceedings, Lecture Notes in Computer Science, Vol. 1109, N. Koblitz ed, Springer-Verlag, 1996]. This kind of MACs is typically used between two parties that share a secret key in order to validate information transmitted between them. Keyed-hashed MACs are used to allow the online verification server to validate special information generated by the seal software on provider sites. When a customer clicks on the seal graphical logo displayed on a webpage of a provider (see Fig. 4), a new browser window pops up at his/her screen. Through this new window, an SSL-secured connection from the customer's browser to the online verification server is established. This is the same online process followed by the first group of trust seals described in previous section. However, instead of basing the verification of the seal on a static provider identifier, the system and method of this invention uses one-time cryptographic credentials. These credentials are generated in real-time by the seal software on the provider site (the details will be explained later). The online verification server validates the credentials, providing the customer with the corresponding valid/invalid result. All events are conveniently logged at the online verification server. The goal of logging is to help identify possible security and technical problems, and to ease auditing and reaction mechanisms in case of security attacks.

Fig. 4 depicts the main steps of the seal verification process according to the present invention providing a complete overview of the online verification of our trust seals as per the present description.

The one-time credentials generated at the provider site comprise as per the embodiment of Fig. 4, following data fields:
a = sequence number,
b = merchant ID,
c = timestamp,
d = customer's IP address, and
e = MAC

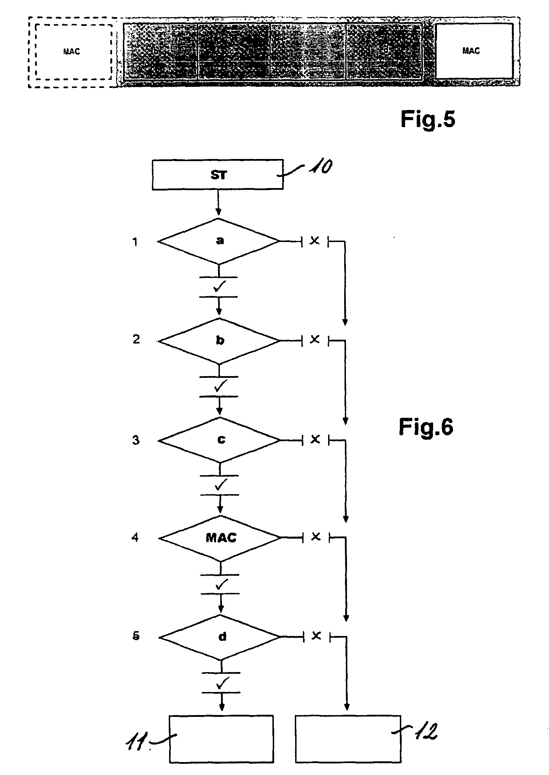

According to a preferred embodiment of the invention, the cryptographic credentials generated at the provider site by the seal software are packaged to constitute a seal token as indicated in Fig. 5. Seal tokens are unique each time by means of a sequence number maintained at each provider site. The sequence number of a provider is initialised to a random value, and it is incremented at each use (it jumps back to 0 when the largest value has been reached). The size of sequence numbers must be large enough to ensure there will be no repetitions during the whole life of a provider site (64 bits suffice).

Alternatively a software at the provider site and associated to the seal can generate a random number or nonce large enough to make repetitions very unlikely.

Said sequential number is verified later by the verification server through a sliding window protocol. In the case of the indicated embodiment, the verification server checks that said random number or nonce received does not coincide with a previous one.

Only certified providers can generate seal tokens because a secret key is involved in the token creation process. Secret keys are unique to each provider and are only known by the online verification server and the corresponding provider. These secret keys must be large enough to resist brute-force key search attacks, and the number of bits to be recommended would depend also of the inner construction of the MAC to be used. In addition, seal tokens include also a timestamp and the IP address used by the customer that has clicked the logo.

The following steps can describe, as an example, the precise construction of a seal token:
a) the seal software reads from a file the last sequence number used, increments it, and stores the new value in the file (these operations must be atomic, to prevent concurrent processes started by different customers from obtaining incorrect values of the sequence number);
b) the seal software concatenates the just obtained sequence number with the current date and time, a static provider identifier, and the IP address of the user that is clicking on the logo;
c) the seal software uses a secret key to compute a MAC for the data obtained in previous step;
d) the complete token is finally constructed by appending the MAC of step c) to the message generated in step b) obtaining a seal token; and
e) the thus obtained seal token is passed to the online verification server, through a SSL connection established from the user's computer.

In the case said seal data structures being created from a random number or nonce generated at each provider site as per the alternative embodiment, previously indicated, following steps describe as an example its precise construction.
a) at the internet provider site a seal software generates a random number or nonce large enough to make repetitions very unlikely;
b) the seal software concatenates in any order the just obtained sequence number with the current date and time, a static provider identifier, and the IP address of the user that is clicking on the logo;
c) the seal software uses a secret key to compute a MAC for the data obtained in step b);
d) the complete token is finally constructed by appending in any order the MAC of step c) to the message generated in step b) obtaining a seal token; and
e) the thus obtained seal token is passed to the online verification server, through a SSL connection established from the user's computer.
   For any of the two embodiments of construct said seal token, following additional steps are foreseen:
f) at the verification server the components of the seal token are each individually validated in any order, and if the validation of at least one of said components is unsuccessful a message is issued to the user informing that the token has not been authenticated ; and
g) a report or log about unsuccessful tokens and/or successful ones is carried out.

Fig. 5 depicts the final result of an one-time seal token generated by a merchant site and comprising the precited following fields: incremented sequence number (a), merchant identification (b), timestamp (c), customer's IP address (d) and a MAC (e) obtained from the previous fields and using the merchant's secret key, said MAC being positioned either at the beginning (square in phantom lines) or at the end.

Any kind of robust MAC algorithm could be used. Basically, secure MACs are based either on one-way hash functions or on a block cipher in CBC (cipher block chaining) mode. The primitive HMAC and NMAC belong to the first group, while the primitive CBC-MAC conforms the second group. For the seal system of this invention HMAC has been chosen following the directions given in (Krawczyk, H. , Bellare, M. and Canetti, R. (1997) HMAC: Keyed-Hashing for Message Authentication, Request for Comments 2104, February 1997), and using SHA-1 (National Institute of Standards and Technology (1995) Secure Hash Standard, Federal Information Processing Standards Publication FIPS PUB 180-1, April 1995) as the underlying hash function. In the case of using this HMAC the secret key used is recommended to be 160 bits in length.

The online verification server validates the received seal token, according to the steps summarized in Figure 6 wherein each of the components a, b, c, MAC and d, of the seal token is checked successively. In box 10 a seal token is received, in box 11 the verified seal token is accepted while in box 12 it is rejected. This process involves consults to the database of certified providers. The database holds information about every provider. The data that is relevant to the seal token verification process includes the static provider id, the corresponding secret key, and a sliding window that handles the more recently used sequence numbers. The purpose of the sliding window is to ensure the synchronism of sequence numbers between every provider site and the online verification server, even considering that the order of generation of tokens may not be exactly the same order in which the tokens are actually received by the verification server. Any customary sliding window protocol can be used for that purpose.

Because of the use of keyed-hashed MACs, valid seal tokens can only be constructed by certified providers. Attackers could try to reiterate attacks using valid tokens previously generated by legitimate providers. However, any previously validated token will not be accepted again. It will be rejected during step 5 (see Fig. 6) of the validation process because of an unsuccessful verification of the sequence number. This makes the proposed system secure against reiterated attacks.

By the presence of user's IP address in one of the fields, each seal token is exclusively related to a corresponding requesting user. Therefore it is not possible for a non-authorized provider site to request a seal token from an authorized provider site on behalf of a particular user.

While the above explanation given as an example refers to the use of symmetric cryptography, the authenticity of said credentials can also be assured using asymmetric cryptography on the basis of a unique private key maintained by each Internet provider and associated to a public key to be used by said verification server to authenticate said site identifying feature, said public key will be stored in a data base or in another suitable storage system.

## Claims

1. System to allow a user to obtain a secure validation that an Internet provider site fulfils predetermined conditions, in a communication network, to manage electronic communication between one o more users and one or more providers each of them capable to establish a coupling to a verification server of an authorisation body via secure connections, each of said provider sites including a site identifying feature prepared to be linked by an associated software to said verification server in order to allow the user to obtain an authentication or trust about the provider site by means of a suitable validation of said identifying feature, **characterised in that** it comprises:
first means at each of said Internet provider sites prepared to generate one-time cryptographic credentials associated to said site identifying feature ensuring freshness of said credentials; and
second means at said verification server constituted by a software prepared to authenticate said site-identifying feature by processing said cryptographic credentials.

2. System according to claim 1, **characterised in that** said verification server comprises a database or another storage system storing the relevant data concerning each of said provider sites.

3. System according to claim 2, **characterised in that** said cryptographic credentials are generated on the basis of a processing by said first means of a unique secret key given to said providers by said verification server, and **in that** said authentication at said verification server uses said secret keys stored at a database thereof.

4. System, according to claim 2, **characterised in that** said cryptographic credentials are generated on the basis of a unique private key maintained by each Internet provider associated to a public key to be used by said verification server to authenticate said Internet site identifying feature.

5. Method to allow a secure validation that an Internet provider site fulfils predetermined conditions, in a communication network, to manage electronic communication between one or more users and one or more providers each of them capable to be coupled to a verification server of an authorisation body via secure connections, each of said provider sites including a site identifying feature prepared to be linked by an associated software to said verification server in order to allow the user to obtain an authentication or trust about the provider site by means of a validation of said identifying feature, **characterised in that** at each of said provider sites one-time cryptographic credentials associated to said site identifying feature are generated by a special-purpose cryptographic software each time a user tries to verify whether the site fulfils predetermined conditions and **in that** said verification server authenticates at said each time said site identifying feature by processing said cryptographic credentials.

6. Method according to claim 5, **characterised in that** said verification server is besides apt to carry out additions, updatings and removals of entries in a data base storing features or data related to said provider sites.

7. Method according to claim 5, **characterised in that** said cryptographic credentials are packaged to constitute in whole a seal token.

8. Method, according to claim 7, **characterised in that** authenticity of said credentials is assured by using symmetric cryptography on the basis of processing a unique secret key given to each of said providers by said verification server to generate said one-time cryptographic credentials, said secret keys being stored at a database to which said verification server can access in order to authenticate each seal token.

9. Method according to claim 7, **characterised in that** authenticity of said credentials is assured by using asymmetric cryptography on the basis of a unique private key maintained by each provider and associated to a public key to be used by said verification server to authenticate said site identifying feature.

10. Method according to claim 8, **characterised in that** the freshness of said credentials is assured by providing that said seal tokens be unique each time and created by means of a sequence number maintained at each provider site, wherein said sequence number is each time initialised to a random value, and it is incremented at each use jumping back to 0 when a predetermined value has been reached, and **in that** said sequence number is checked by the verification server through a sliding window protocol.

11. Method according to claim 8, **characterised in that** the freshness of said credentials is assured by providing that said seal tokens be unique each time and created by means of a sequence number maintained at each provider site, wherein said sequence number is each time initialised to a random value, and it is decremented at each use jumping back to a predetermined value when the 0 has been reached, and **in that** said sequence number is checked by the verification server through a sliding window protocol.

12. Method according to claim 8, **characterised in that** the freshness of said credentials is assured by providing that said seal tokens be unique each time and created by means of a random number generated at each provider site, wherein said random number is large enough to make repetitions very unlikely, and **in that** the verification server checks that the received random value does not correspond with a previous one.

13. Method, according to claim 5, **characterised in that** said one or more user/s are equipped with a web browser software to reach any of the provider sites.

14. Method, according to claim 13, **characterised in that** said site identifying feature is a graphical file such as a logo, and **in that** said link to said verification server is obtained by clinking on it.

15. Method, according to claim 14, **characterised in that** said link to said verification server is an on line SSL-secured connection.

16. Method, according to any of the claims 10 or 11 , **characterised in that** it comprises following steps:
a) a software at the Internet provider site, associated to the seal reads from a file the last sequence number used, increments or decrements it, and stores the new value in the file;
b) the seal software concatenates in any order the just obtained sequence number with the current date and time, a static provider identifier, and the IP address of the user that is clicking on the logo;
c) the seal software uses said secret key to compute a MAC message authentication code for the data obtained in step b);
d) the complete token is finally constructed by concatenating the MAC of step c) with the message generated in step b) in any order; and
e) the thus obtained seal token is passed to the verification server, through a secure connection established from the user's computer.

17. Method, according to the claim 16, **characterised in that** said secure connection of the step e) is an SSL connection.

18. Method, according to the claim 12, **characterised in that** it comprises following steps:
a) a software at the Internet provider site, associated to the seal generates a random number or nonce large enough to make repetitions very unlikely;
b) the seal software concatenates in any order the just obtained random number with the current date and time, a static provider identifier, and the IP address of the user that is clicking on the logo;
c) the seal software uses said secret key to compute a MAC message authentication code for the data obtained in step b);
d) the complete token is finally constructed by concatenating in any ordedr the MAC of step c) with the message generated in step b) in any order; and
e) the thus obtained seal token is passed to the verification server, through a secure connection established from the user's computer.

19. Method according to claim 18, **characterised in that** said secure connection established in step e) is a SSL connection.

20. Method according to claim 16, and further comprising a step f) according to which at the verification server the components of the seal token are each individually validated in any order, and if the validation of at least one of said components is unsuccessful a message is issued to the user informing that the token has not been authenticated.

21. Method according to claim 18, and further comprising a step f) according to which at the verification server the components of the seal token are each individually validated in any order, and if the validation of at least one of said components is unsuccessful a message is issued to the user informing that the token has not been authenticated.

22. Method according to claim 20 or 21 and further comprising a step g) in which a report or log about unsuccessful tokens and/or successful ones is carried out.

23. Method according to claim 16 or 18, **characterised in that** said MAC message authentication code is based either on one-way hash functions or on a block cipher in CBC mode.

24. Method according to claim 23, **characterised in that** said MAC message authentication code is a HMAC, and **in that** SHA-1 is used as the underlying hash function.

25. Method according to claim 16 or 18, **characterised in that** the operations of step a) are atomic, to prevent concurrent processes started by different users from obtaining incorrect values of the sequence number.

26. Method according to claim 16 or 17, **characterised in that** a sliding window handles the more recently used sequence numbers for the purpose of ensuring the synchronism of sequence numbers between every provider site and the verification server independently of the order in which the tokens are actually received by said verification server.

27. A computer program product directly loadable into the internal memory of a digital computer, comprising software code portions for performing the steps of claim 16 or 17 to generate a seal token when said product is run on a computer.

28. A computer program product directly loadable into the internal memory of a digital computer, comprising software code portions for performing the steps of claim 18 or 19 to generate a seal token when said product is run on a computer.

29. A computer program product directly loadable into the internal memory of a digital computer, comprising software code portions for performing the steps of claims 20 or 21.
